# EUROPÄISCHE PATENTSCHRIFT

(11) **EP 3 966 107 B1**
(45) Veröffentlichungstag und Bekanntmachung des Hinweises auf die Patenterteilung: **01.11.2023**
(21) Anmeldenummer: 20725131.5
(22) Anmeldetag: 06.05.2020
(51) Int. Cl.: B64U 30/20, B64U 50/14, B64C 11/00, B64C 29/00, B64C 39/02

(54) **VERTIKAL START- UND LANDFÄHIGES FLUGOBJEKT**
VERTICAL TAKEOFF AND LANDING OBJECT
OBJET À DÉCOLLAGE ET ATTERRISSAGE VERTICAL

(30) Priorität: 08.07.2019 DE 102019210007
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: SAUER, Sebastian, 38104 Braunschweig (DE); KURZ, Carlo, 34590 Wabern (DE); ZLATKOV, Branislav, 38104 Braunschweig (DE); FRICKE, Martin, 38102 Braunschweig (DE); TAPPE, Oliver, 38126 Braunschweig (DE); SANCHA GARCIA, Luis Antonio, 63225 Langen (DE); LÜDERS, Ralf, 31224 Peine (DE)
(86) Internationale Anmeldenummer: PCT/EP2020/062558
(87) Internationale Veröffentlichungsnummer: WO 2021/004677

(56) Entgegenhaltungen:
- EP-A1- 3 176 078
- EP-A1- 3 412 567
- WO-A2-03/066429
- US-A- 2 929 580
- US-A- 4 071 207
- US-A1- 2012 043 413
- US-A1- 2012 298 789

## Beschreibung

Die Erfindung betrifft ein vertikal start- und landefähiges Flugobjekt, umfassend einen Rumpf mit einer Längsachse und mehrere am Rumpf angeordnete Mantelkörper, wobei wenigstens einer der Mantelkörper um eine zu der Längsachse winklig angeordneten Querachse drehbar gelagert ist und wobei das Flugobjekt wenigstens eine Antriebseinrichtung mit einer rotierbaren Strömungsmaschine und einen der Mantelkörper umfasst, wobei die rotierbare Strömungsmaschine eine durch die Querachse rotierbare Rotationsachse aufweist und der Mantelkörper einen sich entlang der Rotationsachse erstreckenden, im Wesentlichen zylindrischen Abschnitt aufweist, wobei der zylindrische Abschnitt die Strömungsmaschine koaxial umgibt.

US 7,472,863 B2 offenbart ein gattungsgemäßes vertikal start- und landefähiges Flugobjekt, wobei jeder Mantelkörper Teil einer Auftriebseinrichtung ist, damit das Flugobjekt gleichmäßig mit den an dem Rumpf angeordneten Antriebseinrichtungen Auf- und Vortrieb erzeugen kann. Das Flugobjekt weist ferner zwei Tragflächen auf, die während eines im Wesentlichen horizontalen Reiseflugs einen Auftrieb generieren. Im Vertikalflug, das heißt im Steig- und/oder Sinkflug, beziehungsweise bei einem Flug mit einer vertikalen Bewegungskomponente bedingen die Tragflächen jedoch einen die vertikale Bewegung hindernden Strömungswiderstand. Ferner ist die Konstruktion und Fertigung der Tragflächen aufwendig. Im Horizontalflug bedingen die Mantelkörper der Antriebseinrichtung einen erheblichen und nicht zu vermeidenden Strömungswiderstand, der die Energieeffizienz des Flugobjektes vermindert. Im Horizontalflug sind die Tragflächen im Windschatten der Mantelkörper, was deren Effektivität vermindert.

EP 3 412 567 A1 offenbart ein Flugobjekt nach dem Oberbegriff des Anspruchs 1 und einen Mantelkörper nach dem Oberbegriff des Anspruchs 7.

US 2012/0043413 A1 offenbart eine Vorrichtung und ein Verfahren für ein vertikal start- und landefähiges Flugobjekt.

WO 03/066429 A2 offenbart ein verbessertes vertikal start- und landefähiges Flugobjekt.

EP 3176078 A1 offenbart ein Mantelgebläse mit variabler Geometrie.

Der Erfindung liegt nun die Aufgabe zugrunde, ein Flugobjekt bereitzustellen, das unabhängig vom Flugmodus eine verbesserte Aerodynamik aufweist und eine einfachere Bauweise ermöglicht.

Erfindungsgemäß ist der Mantelkörper als ein Ringflügel ausgebildet, also in Form eines teilweise beispielsweise zylindrischen Tragflügels mit einem beiderseits offenen und von Luft durchströmbaren Körper, der durch Umströmung mit Luft einen Auftrieb erzeugen kann. Die Erfindung hat erkannt, dass der Mantelkörper aufgrund seiner Ringflügelform sowohl als Auftriebskörper als auch zusammen mit der Strömungsmaschine als Antriebskörper dienen kann. Damit wird die Aerodynamik des Flugobjekts verbessert, insbesondere wenn sich das Flugobjekt in Richtung der Rotationsachse bewegt, wobei die Rotationsachse zugleich die Richtung des Vortriebs ist, der durch die Antriebseinrichtung erzielt wird.

Da der Mantelkörper als ein Ringflügel ausgebildet ist, sind anderweitige Tragflächen am Rumpf des Flugobjekts entbehrlich, womit die Konstruktion und Bauweise des Flugobjekts erleichtert werden. Ferner kann dadurch Gewicht eingespart werden. Der ringflügelförmige Mantelkörper ersetzt die klassische Tragfläche gemäß dem Stand der Technik oder kann ergänzend solche klassische Tragfläche an einem Flugobjekt unterstützen. Insbesondere können mehrere und/oder alle Mantelkörper als Ringflügel ausgebildet sein.

Durch die Rotierbarkeit der Antriebseinrichtung und somit des ringflügelförmigen Mantelkörpers ist sichergestellt, dass der Strömungswiderstand unabhängig vom Flugmodus, also sowohl im Start- und/oder Sinkflug als auch im Reiseflug, verbessert ist.

Die Ringflügelform des Mantelkörpers führt zu einer verbesserten Aerodynamik und energetisch ungünstige Verwirbelungen des durch Bewegung entstehenden Luftstroms werden vermieden und der durch den Luftstrom induzierte Strömungswiderstand wird vermindert. Insbesondere die Reiseflugeigenschaften des Flugobjekts sind verbessert, was die Reichweite, die Stabilität und die Sicherheit des Flugobjekts erhöht und die Reisegeschwindigkeit verbessert. Durch den zylindrischen Abschnitt des Mantelkörpers einer Antriebseinrichtung, der die Strömungsmaschine koaxial umgibt, ergibt sich eine gekapselte Antriebseinrichtung, was zu einer Verminderung des durch die Strömungsmaschine bedingten Geräuschpegels führt und die Strömungsmaschine schützt.

Erfindungsgemäß ist der Mantelkörper um seine Mantelkörper-Längsachse rotierbar gelagert.

In einer bevorzugten Ausführungsform ist der Mantelkörper um wenigstens 80° und/oder um 360° um die Querachse drehbar. Die Drehbarkeit des Mantelkörpers und/oder der Antriebseinrichtung um wenigstens 80° ermöglicht, dass der Mantelkörper beispielsweise für einen Steig- und/oder Sinkflug insbesondere mit der Rotationsachse vertikal ausgerichtet werden kann und der Mantelkörper für einen Reiseflug, der im Wesentlichen in horizontaler Richtung erfolgt, insbesondere mit der Rotationsachse im Wesentlichen horizontal ausgerichtet werden kann. Für den Reiseflug kann die Rotationsachse auch so eingestellt werden, dass eine Antriebseinrichtung und/oder Strömungsmaschine einen Vortrieb in eine Richtung mit einer vertikalen Komponente generiert. Damit ist unabhängig von der Flugrichtung und dem Flugmodus sichergestellt, dass der induzierte Widerstand der Mantelkörper minimiert wird. Es ist auch möglich, dass dafür der Mantelkörper und/oder die Antriebseinrichtung um wenigstens 90° drehbar ist. Die Drehbarkeit des Mantelkörpers und/oder der Antriebseinrichtung um 360° ermöglicht die freie Ausrichtung des Mantelkörpers und/oder der Antriebseinrichtung, beispielsweise um das Flugobjekt während des Reiseflugs bremsen zu können und/oder während eines Sinkflugs beschleunigen zu können.

Vorteilhaft sind mehrere Mantelkörper so um den Rumpf angeordnet, dass wenigstens ein Mantelkörper an einer in Richtung der Längsachse verschiedenen Position zu einem anderen Mantelkörper angeordnet ist und/oder dass wenigstens eine Mantelkörper an einer quer zur Längsachse verschiedenen Position zu einem anderen Mantelkörper angeordnet ist. Sind wenigstens zwei Mantelkörper und/oder Antriebseinrichtungen an in Richtung der Längsachse verschiedenen Positionen angeordnet, verbessert dies die Stabilität und/oder die Kontrollierbarkeit des Flugobjektes gegenüber einer Neigung des Flugobjektes um eine Achse quer zur Längsachse. Damit kann das Flugobjekt gegen Nicken stabilisiert werden. Sind wenigstens zwei Mantelkörper und/oder Antriebseinrichtungen an quer zur Längsachse verschiedenen Positionen angeordnet, verbessert dies die Stabilität und/oder die Kontrollierbarkeit des Flugobjektes gegenüber einer Neigung des Flugobjektes um eine Achse parallel zur Längsachse. Damit kann das Flugobjekt gegen Rollen stabilisiert werden.

Bevorzugt weist das Flugobjekt wenigstens zwei Antriebseinrichtungen auf und wenigstens zwei Strömungsmaschinen sind zur gegenläufigen Rotation eingerichtet, um gyroskopische Kräfte zu kompensieren. Insbesondere können die beiden zur gegenläufigen Rotation eingerichteten Strömungsmaschinen an zwei quer zur Längsachse verschiedenen Positionen angeordnet sein, um ein Rollen des Flugobjektes, das heißt eine Bewegung des Flugobjektes um die Längsachse, zu verhindern. Beispielsweise können die zwei Strömungsmaschinen Propeller mit voneinander verschiedenen Drehrichtungen aufweisen.

Vorteilhaft weist das Flugobjekt wenigstens drei, vorzugsweise vier Mantelkörper auf, um ein Flugobjekt bereitzustellen, das sich besonders einfach und effektiv kontrollieren und antreiben lässt.

In bevorzugter Ausgestaltung der Erfindung ist vorgesehen, dass das Flugobjekt einen um eine quer zur Längsachse verlaufende Querachse rotierbaren ringflügelförmigen Mantelkörper ohne eine darin angeordnete Strömungsmaschine aufweist, da der Mantelkörper allein durch seine Ringflügelform einen Auftrieb generiert und somit zur Steuerung und/oder Stabilisierung des Flugobjekts beitragen kann. Insbesondere kann ein Flugobjekt mehrere Mantelkörper ohne Strömungsmaschinen aufweisen.

Die Erfindung löst das der Erfindung zugrunde liegende Problem auch durch die Bereitstellung eines Mantelkörpers für ein vertikal start- und landefähiges Flugobjekt, wobei der Mantelkörper einen im Wesentlichen zylindrischen Abschnitt aufweist, wobei in dem zylindrischen Abschnitt eine Strömungsmaschine mit einer Rotationsachse koaxial anordenbar ist. Durch den zylindrischen Abschnitt weist der Mantelkörper auch ohne die Strömungsmaschine eine eigene Längsachse auf, entlang derer sich der zylindrische Abschnitt erstreckt und die der Einfachheit halber im Folgenden als Rotationsachse bezeichnet wird.

Erfindungsgemäß ist der Mantelkörper als ein Ringflügel ausgebildet, um die Aerodynamik des Mantelkörpers zu verbessern. Der erfindungsgemäße Mantelkörper kann somit als Auftriebsvorrichtung verwendet werden. Optional kann der Mantelkörper zusammen mit einer koaxial innerhalb des zylindrischen Abschnitts angeordneten Strömungsmaschine eine Antriebseinrichtung bilden.

Erfindungsgemäß weist der Mantelkörper eine Aufnahmevorrichtung auf, die dazu eingerichtet ist, den Mantelkörper an einem Rumpf des Flugobjektes um eine Querachse rotierbar zu lagern. Damit kann der Mantelkörper für ein vertikal start- und landefähiges Flugobjekt verwendet werden, dass durch Rotation des Mantelkörpers um die Querachse den Mantelkörper vorteilhaft für verschiedene Flugmodi ausrichten kann, das heißt insbesondere vertikal für einen Steig- und/oder Sinkflug oder horizontal für einen Reiseflug. Insbesondere kann der Mantelkörper beispielsweise an einer um die Querachse rotierbar gelagerten Welle angebracht sein.

Erfindungsgemäß ist der Mantelkörper um seine Mantelkörper-Längsachse rotierbar lagerbar.

In bevorzugter Ausgestaltung der Erfindung ist vorgesehen, dass der Mantelkörper einen sich entlang der Rotationsachse verjüngenden Querschnitt aufweist, um die Aerodynamik des Mantelkörpers zu verbessern. Der Querschnitt des Mantelkörpers kann sich insbesondere ausgehend von dem in insbesondere in Flugrichtung angeordneten zylindrischen Abschnitt entgegen der Flugrichtung so weit verjüngen, dass ein ungewollter Strömungsabriss verhindert werden kann und/oder am Mantelkörper entstehende Verwirbelungen minimiert werden. Vorzugsweise weist der Mantelkörper eine angeschrägte und/oder gekrümmte Stirnseite auf, um die Aerodynamik des Mantelkörpers weiter zu verbessern. Dafür kann eine Stirnseite des Mantelkörpers wenigstens eine Aussparung und/oder wenigstens einen entlang der Rotationsachse hervorstehenden Strömungsableiter aufweisen, wobei der Mantelkörper insbesondere zwei Strömungsableiter aufweist, die in einem Öffnungswinkel von 60° bis 130°, vorteilhaft von 75° bis 120°, besonders vorteilhaft von 115° voneinander fortragen. Dies führt zu einer weiter verbesserten Aerodynamik und einem weiter verminderten Strömungswiderstand und kann zu einem weiter verbesserten Auftrieb der Mantelkörper führen. Die Strömungsableiter bewirken, dass am Mantelkörper bei der Umströmung mit Luft eine Wirbelschleppe erst im Bereich der Strömungsableiter entsteht, was die Aerodynamik weiter verbessert. Die Strömungsableiter können insbesondere im Reiseflug den Auftrieb erhöhen.

In weiterer bevorzugter Ausgestaltung der Erfindung ist vorgesehen, dass die Außenseite des Mantelkörpers einen parallel zur Rotationsachse verlaufenden ersten Abschnitt und einen parallel zur Rotationsachse verlaufenden zweiten Abschnitt aufweist, wobei der erste Abschnitt eine betragsmäßig größere Krümmung aufweist als der zweite Abschnitt. Damit ist der Mantelkörpers im Querschnitt quer zur Rotationsachse asymmetrisch, was insbesondere im Horizontalflug, das heißt wenn sich das Flugobjekt im Wesentlichen horizontal bewegt und die Rotationsachse im Wesentlichen horizontal ausgerichtet ist, zu einem Auftrieb durch die Umströmung des Mantelkörpers führt. Vorteilhaft ist dazu der erste Abschnitt dem zweiten Abschnitt diametral gegenüber angeordnet, um den Auftrieb, der durch die Umströmung des Mantelkörpers entsteht, möglichst effektiv nutzen zu können.

Das beschriebene Flugobjekt kann in sämtlichen Ausführungsformen mit allen vorteilhaften Ausführungsformen des Mantelkörpers kombiniert werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine perspektivische Ansicht eines Flugobjektes gemäß einer Ausführungsform der Erfindung;
- Figur 2: eine Seitenansicht des in Figur 1 gezeigten Flugobjektes;
- Figur 3: eine Draufsicht des in Figuren 1 und 2 gezeigten Flugobjektes;
- Figur 4: einen Längsschnitt einer Antriebseinrichtung;
- Figur 5: eine Seitenansicht eines Mantelkörpers;
- Figur 6: einen schematischen Längsschnitt des Mantelkörpers gemäß Figur 5; und
- Figur 7: einen Querschnitt der Antriebseinrichtung gemäß Figur 4.

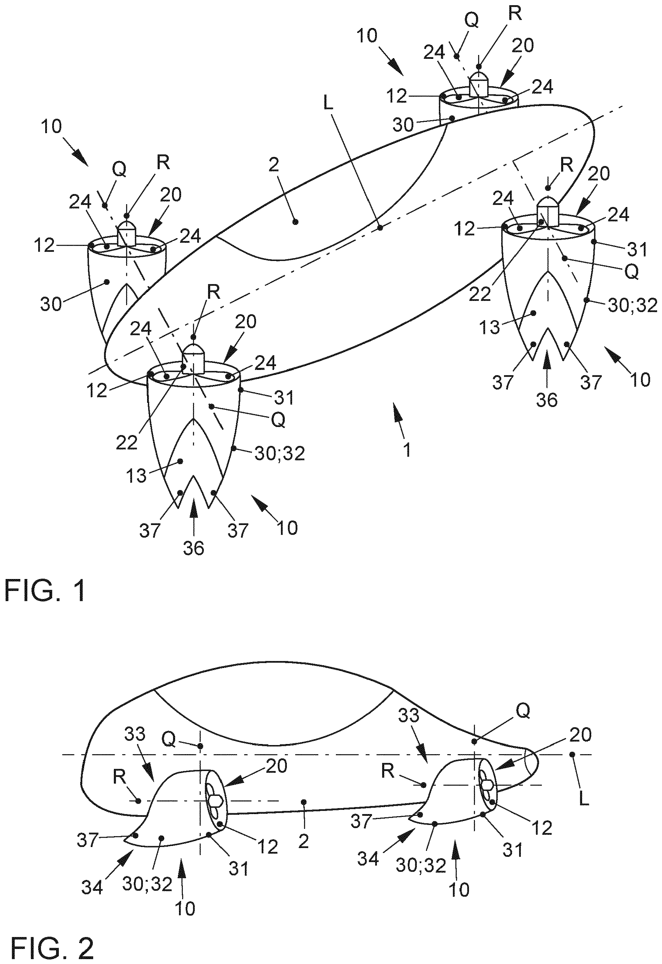

Figur 1 zeigt eine perspektivische Ansicht eines Flugobjektes 1 gemäß einer Ausführungsform der Erfindung. Das Flugobjekt 1 umfasst einen Rumpf 2 mit einer Längsachse L. Der Rumpf 2 ist insbesondere mit Hinblick auf einen Reiseflug in Richtung der Längsachse L aerodynamisch gestaltet.

Das Flugobjekt 1 weist am Rumpf 2 mehrere Antriebseinrichtungen 10 auf. Die Antriebseinrichtungen 10 sind jeweils um eine zu der Längsachse L winklig, beispielsweise senkrecht angeordnete Querachse Q drehbar gelagert. Die Antriebseinrichtungen 10 weisen eine rotierbare Strömungsmaschine 20 und einen Mantelkörpers 30 auf. Die rotierbare Strömungsmaschine 20 weist eine Rotationsachse R auf, um die beispielsweise ein Propeller rotieren kann. Damit kann die Strömungsmaschine 20 einen Vortrieb generieren, mit dem das Flugobjekt 1 angetrieben werden kann. Durch die Drehbarkeit der Antriebseinrichtung 10 um die Querachse Q ist die Rotationsachse R ebenfalls um die Querachse Q rotierbar. Damit ist die Richtung des durch die Strömungsmaschine 20 genierten Vortriebs einstellbar.

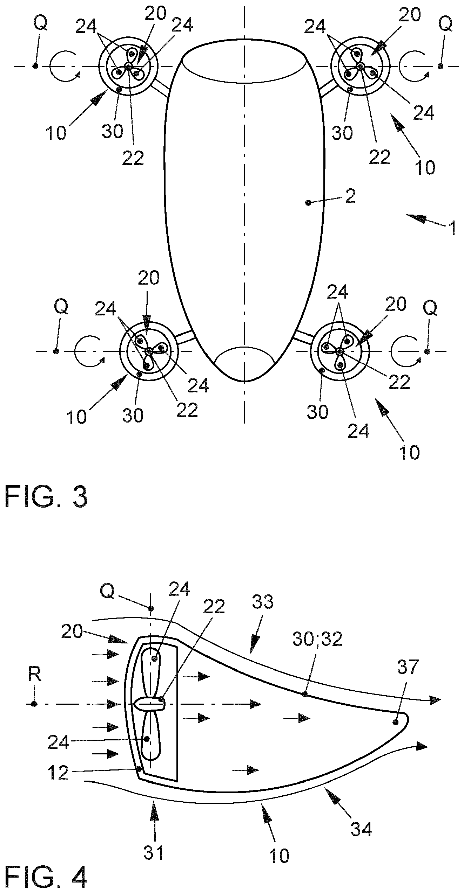

Der Mantelkörper 30 ist als ein Ringflügel ausgebildet und wird mit Hinblick auf die Figuren 4 bis 7 näher beschrieben.

Durch die Rotierbarkeit der Antriebseinrichtungen 10 und den Vortrieb, der durch die Strömungsmaschine 20 generiert werden kann, kann das Flugobjekt 1 angetrieben und gesteuert werden. Damit ist das Flugobjekt 1 vertikal start- und landefähig.

Die in diesem Beispiel vier Antriebseinrichtungen 10 sind so um den Rumpf angeordnet, dass jeweils zwei Antriebseinrichtung 10 an einer in Richtung der Längsachse L verschiedenen Position zu einer anderen Antriebseinrichtung 10 angeordnet sind und dass je zwei Antriebseinrichtung 10 an einer quer zur Längsachse L verschiedenen Position zu einer anderen Antriebseinrichtung 10 angeordnet sind. Damit wird eine hohe Stabilität und/oder Kontrollierbarkeit des Flugobjektes 1 sowohl gegenüber einer Rotation des Flugobjektes 1 um eine Achse quer zur Längsachse L als auch gegenüber einer Rotation des Flugobjektes 1 um die Längsachse L erzielt. Die Antriebseinrichtungen 10 können verschieden angeordnet werden, beispielsweise können die jeweiligen Querachsen Q der Antriebseinrichtungen zueinander parallel oder winklig sein. Die Anzahl der Antriebseinrichtung 10 kann auf die Form, Leistung und Dimension des Flugobjekts 1 abgestimmt sein.

Auch können zusätzliche Mantelkörper 30 um eine Querachse Q rotierbar um den Rumpf 2 angeordnet sein, in denen keine Strömungsmaschine 20 angeordnet ist (nicht dargestellt), um eine zusätzliche Steuerung und/oder Stabilisierung während des Flugs zu gewährleisten. Ein Flugobjekt 1 kann Antriebseinrichtungen 10 und Mantelkörper 30, insbesondere ohne Strömungsmaschine 20 aufweisen, wobei ein Mantelkörper 30 analog zu den Antriebseinrichtungen 10 um eine Querachse Q rotierbar am Rumpf 2 gelagert ist. Der Mantelkörper 30, insbesondere ohne Strömungsmaschine 20 kann allein durch seine Ringflügelform einen Auftrieb generieren und somit wie eine Tragfläche wirken und/oder durch die Rotierbarkeit des Mantelkörpers 30 zur Steuerung des Flugobjekts 1 beitragen.

Der Mantelkörper 30 ist um seine Längsachse rotierbar gelagert. Durch eine rotierbare Lagerung des Mantelkörpers 30 um seine Längsachse kann der Auftrieb, der durch den Mantelkörper 30 im Flug durch das Umströmen mit Luft generiert wird, gezielt in eine durch die Rotation des Mantelkörpers 30 um seine Längsachseeinstellbare Richtung gerichtet werden Beispielsweise kann das Flugobjekt 1 durch einen Ausfall oder Abschalten einer Strömungsmaschine 20 in eine Schieflage tendieren, da der Auftrieb auf der Seite des ausgefallenen oder ausgeschalteten Mantelkörpers 30 reduziert ist. Wenn der ausgefallene oder ausgeschaltete Mantelkörper 30 entsprechend um die Längsachse rotiert wird, kann er durch die Umströmung mit Luft einen Auftrieb erzeugen, der der Schieflage entgegenwirkt und diese vorteilhaft kompensiert. Das Flugobjekt 1 kann so in einen stabilen Sinkflug gebracht werden.

Das Flugobjekt 1 kann durch den Auftrieb der Mantelkörper 30 auch ohne Antrieb durch eine Strömungsmaschine 20 segeln, was zu einer weiteren Verbesserung der Reichweite führt, die vorhandene Bewegungsenergie des Flugobjekts 1 zur weiteren Fortbewegung nutzt und eine fail-safe-Funktion bei Vortriebsverlust sicherstellt.

Aufgrund der Eigenschaft des Flugobjekts 1 energieeffizient vertikal starten und landen und im Horizontalflug fliegen zu können, kann das Flugobjekt 1 insbesondere zum Transport von Gütern und/oder Personen beispielsweise als Flugtaxi zum Einsatz kommen. Das Flugobjekt 1 benötigt nur eine sehr geringe Lande- und Startflächen, keine aufwändige Infrastruktur und kann in Ausführungsformen mit oder ohne Pilot, das heißt autonom, ausgeführt werden.

In dem in Figur 1 dargestellten Beispiel sind die Antriebseinrichtungen 10 so ausgerichtet, dass die Rotationsachse R senkrecht zum Boden ausgerichtet ist. Damit können die Antriebseinrichtungen 10 einen Vortrieb in vertikaler Richtung erzeugen und das Flugobjekt 1 kann damit einen Steig- und/oder Sinkflug vollziehen. Durch Rotation der Antriebseinrichtungen 10 um die jeweilige Querachse Q ergeben sich unterschiedliche Möglichkeiten, das Flugobjekt 1 im Raum schweben zu lassen und/oder in Flugrichtung zu beschleunigen. Durch Schwenken beziehungsweise Rotieren der Antriebseinrichtungen 10 kann eine Beschleunigung in eine Flugrichtung erzeugt und/oder die Flugrichtung geändert werden. Durch eine Drehung der Antriebseinrichtungen 10 um die jeweiligen Querachsen Q kann ein schneller Reiseflug bei einem geringen Leistungsbedarf erzielt werden, siehe Figur 2. Dabei erzeugen die ringflügelförmigen Mantelkörper 30 im Flug Auftrieb, der das gesamte Flugobjekt 1 tragen kann.

Figur 2 zeigt eine Seitenansicht des in Figur 1 gezeigten Flugobjektes 1. In diesem Beispiel befindet sich das Flugobjekt 1 im Reiseflug beziehungsweise Horizontalflug. Das heißt, die Antriebseinrichtungen 10 sind so ausgerichtet, dass die Rotationsachse R im Wesentlichen parallel zur Längsachse L ausgerichtet ist. Damit kann die Antriebseinrichtung 10 einen Vortrieb in horizontaler Richtung beziehungsweise in Richtung der Längsachse L generieren. Die Antriebseinrichtungen 10 sind gegenüber der zum Starten und/oder Landen vorgesehenen Ausrichtungen um jeweils 90° um ihre jeweilige Querachse Q rotiert. Die Mantelkörper 30 sind für die Aerodynamik verantwortlich und die Strömungsmaschine 20 erzeugt Vortrieb.

Die Mantelkörper 30 der Antriebseinrichtungen 10 erzeugen im Reiseflug allein durch ihre Ringflügelform einen Auftrieb, der das Flugobjekt 1 auf einer gewünschten Höhe hält und/oder dies unterstützt.

Für den Fall, dass eine Strömungsmaschine 20 deaktiviert ist, beispielsweise abgeschaltet oder ausgefallen, kann sich das Flugobjekt 1 durch Gleiten mithilfe der auftrieberzeugenden ringflügelförmigen Mantelkörper 30 weiter fortbewegen und sicher gelandet werden. Dies trifft auch dann zu, wenn alle elektronischen Hilfsmittel ausfallen sollten, da das Flugobjekt 1 durch die aerodynamische Form der Mantelkörper 30 stabilisiert wird. Dabei ist durch die Bauform und Befestigung der Mantelkörper 30 am Rumpf 2 sowie einer vorteilhaften um die Lufteinlassöffnung 12 angeordneten Wulst an der vorderen Stirnseite des Mantelkörpers 30 sichergestellt, dass kein Strömungsabriss erfolgt.

Figur 3 zeigt eine Draufsicht des in Figuren 1 und 2 gezeigten Flugobjektes 1. In diesem Beispiel befindet sich das Flugobjekt 1 im Steig- und/oder Sinkflug. Das heißt, die Antriebseinrichtungen 10 sind so ausgerichtet, dass die in Figur 3 nicht eingezeichnete und in die Papierebene ragende Rotationsachse R im Wesentlichen vertikal und in diesem Beispiel senkrecht zur Längsachse L ausgerichtet ist. Damit kann die Antriebseinrichtung 10 einen Vortrieb in vertikaler Richtung beziehungsweise in Richtung senkrecht zur Längsachse L generieren.

Der ringflügelförmige Mantelkörper 30 und die vorteilhaften ausgeprägten Strömungsableiter 37 der Antriebseinrichtung 10 unterstützt die Kontrolle des Flugobjekts 1 im Steig- und/oder Sinkflug und weist eine vorteilhafte Aerodynamik mit einem geringen Strömungswiderstand auf.

Durch das Einschalten der Antriebseinrichtung 10 werden die speziellen aerodynamisch geformten Schaufeln 24 der Strömungsmaschine 20 in Rotation um die Rotationsachse R versetzt und sorgen für eine nach unten gerichtete Kraft, die das Flugobjekt 1 senkrecht nach oben steigen lässt. Durch unterschiedliche Drehzahlen und/oder die Ausrichtung der Rotationsachse R der vier voneinander unabhängig steuerbaren Antriebseinrichtungen 10 entstehen Fluglageänderungen, das heißt Änderungen der Lage des Flugobjekts 1, die es ermöglichen, in alle Richtungen zu fliegen und das Flugobjekt gezielt 2 auszurichten und/oder gegenüber Rollen, Nicken und/oder Gieren zu stabilisieren.

Figur 4 zeigt einen Längsschnitt einer Antriebseinrichtung 10. Die Antriebseinrichtung 10 weist eine Strömungsmaschine 20 und einen Mantelkörper 30 auf. Die Strömungsmaschine 20 weist einen Propeller mit Flügeln 24 und einer Welle 22 auf. Die Flügel 24 sind an der Welle 22 gehalten und die Welle 22 ist rotierbar um die Rotationsachse R gelagert. Damit können die Flügel 24 um die Rotationsachse R rotieren und die Strömungsmaschine 20 kann einen durch Pfeile in Figur 4 angedeuteten Luftstrom generieren, der zu einem Vortrieb führt mit dem das Flugobjekt 1 angetrieben werden kann.

Die Antriebseinrichtung 10 ist so rotierbar, dass die Rotationsachse R um eine Querachse Q rotieren kann. Damit kann die Richtung des Vortriebs bestimmt werden, der von der Antriebseinrichtung 10 generiert werden kann. In diesem Ausführungsbeispiel schneiden sich die Querachse Q und die Rotationsachse R im Bereich der Halterung der Flügel 24 an der Welle 22. In anderen Ausführungsbeispielen kann die Querachse Q jedoch gegenüber der gezeigten Querachse Q verschoben und/oder verdreht sein.

Der Mantelkörper 30 weist eine Lufteinlassöffnung 12 und eine in Figur 4 nicht dargestellte Luftauslassöffnung 13 auf. Die Lufteinlassöffnung 12 und die Luftauslassöffnung 13 sind an entlang der Rotationsachse R gegenüberliegenden Enden des Mantelkörpers 30 angeordnet. Durch die Lufteinlassöffnung 12 kann ein Luftstrom in die Antriebseinrichtung 10 eintreten, die Antriebseinrichtung 10 durchströmen und an der Luftauslassöffnung 13 austreten. Die vordere Lufteinlassöffnung 12 kann wulstartig ausgeprägt sein, um den Luftmassenstrom insbesondere innerhalb des Mantelkörpers 30 zu beschleunigen und gleichzeitig eine Gewichtserhöhung im vorderen Teil zu erlangen, was sich positiv auf die Eigenstabilität auswirkt. Im Falle eines Strömungsabrisses im Langsamflug kann der Mantelkörper 30 nach vorne kippen und das Flugobjekt 1 eigenstabil und kontrolliert in der Luft halten.

Die Strömungsmaschine 20 ist im Bereich der Lufteinlassöffnung 12 angeordnet. Der Mantelkörper 30 weist einen sich entlang der Rotationsachse R erstreckenden, im Wesentlichen zylindrischen Abschnitt 31 auf, der die Strömungsmaschine 20 koaxial umgibt.

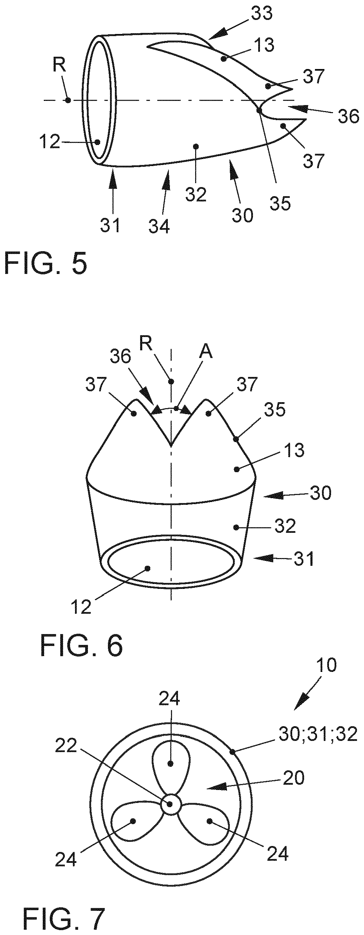

Die mit Hinblick auf Figuren 5 und 6 näher erläuterte Geometrie des Mantelkörpers 30 ermöglicht, dass die den Mantelkörper 30 umströmende Luft unnötige Verwirbelungen und Strömungswiderstände minimiert und ein Auftrieb generiert wird, der die Flugeigenschaften des Flugobjekts 1 unterstützt.

Figur 5 zeigt eine Seitenansicht eines Mantelkörpers 30 der Antriebseinrichtung 10 wie in Figur 4 gezeigt, wobei in dem zylindrischen Abschnitt 31 eine Strömungsmaschine 20 mit einer Rotationsachse R koaxial anordenbar ist. Durch den zylindrischen Abschnitt 31 weist der Mantelkörper 30 eine eigene Längsachse auf, entlang derer sich der zylindrische Abschnitt 31 erstreckt und die der Einfachheit halber im Folgenden ebenfalls als Rotationsachse R bezeichnet wird. Der Mantelkörper 30 kann auch ohne die Antriebseinrichtung 10 für die Lenkung, Steuerung und/oder Stabilisierung des Flugobjekts 1 am Rumpf 2 angebracht sein.

Ausgehend von dem im Wesentlichen zylindrischen Abschnitt 31 verjüngt sich der Mantelkörper 30 entlang der Rotationsachse R von der Lufteinlassöffnung 12 bis zur Luftauslassöffnung 13 beziehungsweise bis zu einem durch zwei Strömungsableiter 37 gebildeten Endabschnitt des Mantelkörpers 30, die besonders vorteilhaft einen Öffnungswinkel A von 115° aufweisen. Der Öffnungswinkel A kann dabei durch den Winkel definiert werden, der sich zwischen den beiden Strömungsableitern 37 von ihrem gemeinsamen Ansatz zur jeweiligen Spitze der Strömungsableiter 37 ergibt. Ein Öffnungswinkel A von mehr als 90° und vorteilhaft von 115° erzeugt insbesondere im Reiseflug mit beispielsweise 200 km/h einen höheren Auftrieb als ein Mantelkörper 30 ohne Strömungsableiter 37.

Die Außenseite 32 des Mantelkörpers 30 weist einen parallel zur Rotationsachse R verlaufenden ersten Abschnitt 33 und einen parallel zur Rotationsachse R verlaufenden zweiten Abschnitt 34 auf. Der erste Abschnitt 33 ist dem zweiten Abschnitt 34 diametral gegenüber angeordnet. Der erste Abschnitt 33 weist eine betragsmäßig größere Krümmung auf als der zweite Abschnitt 34. Damit wird eine höhere Geschwindigkeit der um den Mantelkörper 30 strömenden Luft im ersten Abschnitt 33 als im zweiten Abschnitt 34 erzielt. Dadurch stellt sich auf der Oberseite des Mantelkörpers 30, also am ersten Abschnitt 33 ein niedrigerer Druck ein als im zweiten Abschnitt 34, woraus der Auftrieb resultiert (Bernoulli-Effekt), siehe auch Figur 4. Der so gewonnene Auftrieb ersetzt vorteilhaft die Nutzung einer klassischen Tragfläche. Durch die Geometrie und die Ringflügelform des Mantelkörpers 30 wird der induzierte Widerstand, der durch den Auftrieb an den Flügelspitzen entsteht, weitgehend eliminiert, was zu einer Effizienzsteigerung führt.

Im Bereich des ersten Abschnitts 33 ist eine Aussparung 36 vorgesehen, die insbesondere den Strömungswiderstand innerhalb des Mantelkörpers 30 vermindern kann. Die Aussparung 36 erstreckt sich von dem im Wesentlichen zylindrischen Abschnitt 31 bis zu den Strömungsableitern 37. Der Auftriebs - Mantelkörper 30 weist in seiner Bauform im hinteren Abschnitt die zwei Strömungsableiter 37 auf, die durch die unterschiedlichen Druckverhältnisse zwischen Ober- und Unterseite des Mantelkörpers 30 zu einem kontrollierten Druckausgleich führen, um dem entstehenden Auftriebswiderstand entgegenzuwirken beziehungsweise zu egalisieren.

Der Mantelkörper 30 kann mit allen in der Luftfahrt herkömmlichen Verfahren zur Fertigung und Werkstoffen hergestellt werden.

Figur 6 zeigt einen schematischen Längsschnitt des Mantelkörpers 30 gemäß Figur 5. Der Mantelkörper 30 weist eine angeschrägte und gekrümmte Stirnseite 35 auf. In diesem Beispiel ist die Stirnseite 35 die Stirnseite des Mantelkörpers 30, an dem die Luftauslassöffnung 13 vorgesehen ist. Damit ist die gekrümmte Stirnseite 35 im Betrieb der Antriebseinrichtung 10 stromabwärts der Strömungsmaschine 20 angeordnet.

Die Stirnseite 35 des Mantelkörpers 30 weist eine Aussparung 36 sowie zwei entlang der Rotationsachse R vorstehende Strömungsableiter 37 auf. In anderen Ausführungsformen kann auch nur ein Strömungsableiter 37 und/oder keine Aussparung 36 vorgesehen sein. Die Stirnseite 35 ist angeschrägt und gekrümmt, wie auch in Figur 5 zu erkennen, damit die Aerodynamik des Mantelkörpers 30 vorteilhaft ist.

Figur 7 zeigt einen Querschnitt der Antriebseinrichtung 10 gemäß Figur 4. Der gezeigte Querschnitt zeigt die Strömungsmaschine 20, die von dem zylindrischen Abschnitt 31 des Mantelkörpers 30 koaxial umgeben ist. Die Strömungsmaschine 20 ist in den gezeigten Beispielen als eine Propellermaschine mit einer Welle 22 und Schaufeln 24 ausgeführt und rein exemplarisch zu verstehen. Es kann jegliche Strömungsmaschine 20 eingesetzt werden, die chemische oder elektrische Energie in kinetische Energie in Form von einem Vortrieb beispielsweise aufgrund eines Luftstroms umwandelt. Insbesondere können dabei alternative Kraftstoffe, CO2-freie Antriebe und regenerative Energien verwendet werden, um die Strömungsmaschine 20 anzutreiben.

### Bezugszeichenliste

- 1: Flugobjekt
- 2: Rumpf
- 10: Antriebseinrichtung
- 12: Lufteinlassöffnung
- 13: Luftauslassöffnung
- 20: Strömungsmaschine
- 22: Welle
- 24: Flügel
- 30: Mantelkörper
- 31: zylindrischer Abschnitt
- 32: Außenseite
- 33: erster Abschnitt
- 34: zweiter Abschnitt
- 35: Stirnseite
- 36: Aussparung
- 37: Strömungsableiter
- A: Öffnungswinkel
- L: Längsachse
- Q: Querachse
- R: Rotationsachse

## Patentansprüche

1. Vertikal start- und landefähiges Flugobjekt (1), umfassend
- einen Rumpf (2) mit einer Längsachse (L) und
- mehrere am Rumpf (2) angeordnete Mantelkörper (30), wobei
- wenigstens einer der Mantelkörper (30) um eine zu der Längsachse (L) winklig angeordnete Querachse (Q) drehbar gelagert ist, und wobei
- das Flugobjekt (1) wenigstens eine Antriebseinrichtung (10) mit einer rotierbaren Strömungsmaschine (20) und einen der Mantelkörper (30) umfasst, wobei
- die rotierbare Strömungsmaschine (20) eine durch die Querachse (Q) rotierbare Rotationsachse (R) aufweist, und
- der Mantelkörper (30) einen sich entlang der Rotationsachse (R) erstreckenden, im Wesentlichen zylindrischen Abschnitt (31) aufweist, wobei
- der zylindrische Abschnitt (31) die Strömungsmaschine (20) koaxial umgibt, wobei
- der Mantelkörper (30) als ein Ringflügel ausgebildet ist, **dadurch gekennzeichnet, dass**
- der Mantelkörper (30) eine Mantelkörper-Längsachse aufweist, und der Mantelkörper (30) um die Mantelkörper-Längsachse rotierbar gelagert ist.

2. Flugobjekt (1) nach Anspruch 1, **dadurch gekennzeichnet, dass** der Mantelkörper (30) um wenigstens 80°, insbesondere wenigstens 90° und/oder um 360° um die Querachse (Q) drehbar ist.

3. Flugobjekt (1) nach einem der vorangegangen Ansprüche, **dadurch gekennzeichnet, dass** mehrere Mantelkörper (30) so um den Rumpf (2) angeordnet sind, dass wenigstens ein Mantelkörper (30) an einer in Richtung der Längsachse (L) verschiedenen Position zu einem anderen Mantelkörper (30) angeordnet ist und/oder dass der wenigstens eine Mantelkörper (30) an einer quer zur Längsachse (L) verschiedenen Position zu einem anderen Mantelkörper (30) angeordnet ist.

4. Flugobjekt (1) nach einem der vorangegangen Ansprüche, **dadurch gekennzeichnet, dass** das Flugobjekt (1) wenigstens zwei Antriebseinrichtungen (10) aufweist, und wenigstens zwei Strömungsmaschinen (20) zur gegenläufigen Rotation eingerichtet sind.

5. Flugobjekt (1) nach einem der vorangegangen Ansprüche, **dadurch gekennzeichnet, dass** das Flugobjekt (1) wenigstens drei, vorzugsweise vier Mantelkörper (30) aufweist.

6. Flugobjekt (1) nach einem der vorangegangen Ansprüche, **dadurch gekennzeichnet, dass** das Flugobjekt (1) einen um eine quer zur Längsachse (L) verlaufende Querachse (Q) rotierbaren ringflügelförmigen Mantelkörper (30) ohne eine darin angeordnete Strömungsmaschine (20) aufweist.

7. Mantelkörper (30) für ein vertikal start- und landefähiges Flugobjekt (1), wobei der Mantelkörper (30) einen im Wesentlichen zylindrischen Abschnitt (31) aufweist, wobei in dem zylindrischen Abschnitt (31) eine Strömungsmaschine (20) mit einer Rotationsachse (R) koaxial anordenbar ist, wobei der Mantelkörper (30) als ein Ringflügel ausgebildet ist, und der Mantelkörper (30) eine Aufnahmevorrichtung aufweist, die dazu eingerichtet ist, den Mantelkörper (30) an einem Rumpf (2) des Flugobjektes (1) um eine Querachse (Q) rotierbar zu lagern, **dadurch gekennzeichnet, dass** der Mantelkörper (30) eine Mantelkörper-Längsachse aufweist, und der Mantelkörper (30) um die Mantelkörper-Längsachse rotierbar lagerbar ist.

8. Mantelkörper (30) nach Anspruch 7, **dadurch gekennzeichnet, dass** der Mantelkörper (30) einen sich entlang der Rotationsachse (R) verjüngenden Querschnitt aufweist, der Mantelkörper (30) eine angeschrägte und/oder gekrümmte Stirnseite (35) aufweist und/oder eine Stirnseite (35) des Mantelkörpers (30) wenigstens eine Aussparung (36) und/oder wenigstens einen entlang der Rotationsachse (R) hervorstehenden Strömungsableiter (37) aufweist, wobei der Mantelkörper (30) insbesondere zwei Strömungsableiter (37) aufweist, die in einem Öffnungswinkel von 60° bis 130°, vorteilhaft von 75° bis 120°, besonders vorteilhaft von 115° voneinander fortragen.

9. Mantelkörper (30) nach einem der Ansprüche 7 oder 8, **dadurch gekennzeichnet, dass** die Außenseite (32) des Mantelkörpers (30) einen parallel zur Rotationsachse (R) verlaufenden ersten Abschnitt (33) und einen parallel zur Rotationsachse (R) verlaufenden zweiten Abschnitt (34) aufweist, wobei der erste Abschnitt (33) eine betragsmäßig größere Krümmung aufweist als der zweite Abschnitt (34).

10. Mantelkörper (30) nach Anspruch 9, **dadurch gekennzeichnet, dass** der erste Abschnitt (33) dem zweiten Abschnitt (34) diametral gegenüber angeordnet ist.

## Claims

1. Vertical take-off and landing airborne object (1), comprising
- a fuselage (2) with a longitudinal axis (L) and
- a plurality of casing bodies (30) arranged on the fuselage (2), wherein
- at least one of the casing bodies ( 30 ) is rotatably mounted about a transverse axis (Q) arranged at an angle to the longitudinal axis (L), and wherein
- the airborne object (1) comprises at least one drive means (10) with a rotatable turbomachine (20) and one of the casing bodies (30), wherein
- the rotatable turbomachine (20) has an axis of rotation (R) rotatable through the transverse axis (Q), and
- the casing body (30) has a substantially cylindrical portion (31) extending along the axis of rotation (R), wherein
- the cylindrical portion (31) coaxially surrounds the turbomachine (20), wherein
- the casing body (30) is designed as an annular wing,
**characterized in that**
- the casing body (30) has a casing body longitudinal axis, and the casing body (30) is rotatably mounted about the casing body longitudinal axis.

2. Airborne object (1) according to claim 1, **characterized in that** the casing body (30) is rotatable by at least 80°, in particular at least 90° and/or by 360° about the transverse axis (Q).

3. Airborne object (1) according to either of the preceding claims,**characterized in that** a plurality of casing bodies (30) are arranged around the fuselage (2) such that at least one casing body (30) is arranged at a different position in the direction of the longitudinal axis (L) from another casing body (30) and/or **in that** the at least one casing body (30) is arranged at a different position transverse to the longitudinal axis (L) from another casing body (30).

4. Airborne object (1) according to any of the preceding claims,**characterized in that** the airborne object (1) has at least two drive means (10), and at least two turbomachines (20) are designed for counter-rotation.

5. Airborne object (1) according to any of the preceding claims,**characterized in that** the airborne object (1) has at least three, preferably four, casing bodies (30).

6. Airborne object (1) according to any of the preceding claims, **characterized in that** the airborne object (1) has an annular-wing-shaped casing body (30) which is rotatable about a transverse axis (Q) extending transversely to the longitudinal axis (L), without a turbomachine arranged therein (20).

7. Casing body (30) for a vertical take-off and landing airborne object (1), wherein the casing body (30) has a substantially cylindrical portion (31), wherein, in the cylindrical portion (31), a turbomachine (20) can be arranged coaxially with an axis of rotation (R), wherein the casing body (30) is designed as an annular wing, and the casing body (30) has a receiving device which is designed to mount the casing body (30) on a fuselage (2) of the airborne object (1) so as to be rotatable about a transverse axis (Q), **characterized in that** the casing body (30) has a casing body longitudinal axis, and the casing body (30) can be rotatably mounted about the casing body longitudinal axis.

8. Casing body (30) according to claim 7, **characterized in that** the casing body (30) has a cross section tapering along the axis of rotation (R), the casing body (30) has a beveled and/or curved end face (35) and/or one end face (35) of the casing body (30) has at least one recess (36) and/or at least one flow deflector (37) protruding along the axis of rotation (R), the casing body (30) having in particular two flow deflectors (37) which project from one another at an opening angle of 60° to130°, advantageously 75° to 120°, particularly advantageously 115°.

9. Casing body (30) according to either of claims 7 or 8,
**characterized in that** the outer side (32) of the casing body (30) has a first portion (33) extending in parallel with the axis of rotation (R) and a second portion (34) extending in parallel with the axis of rotation (R), wherein the first portion (33) has a curvature which is greater in magnitude than the second portion (34).

10. Casing body (30) according to claim 9, **characterized in that** the first portion (33) is arranged diametrically opposite the second portion (34).

## Revendications

1. Objet volant (1) pouvant décoller et atterrir à la verticale, comprenant
- un fuselage (2) comprenant un axe longitudinal (L) et
- plusieurs corps formant enveloppe (30) disposés sur le fuselage (2),
- au moins un des corps formant enveloppe (30) étant monté rotatif autour d'un axe transversal (Q) disposé angulairement par rapport à l'axe longitudinal (L), et
- l'objet volant (1) comprenant au moins un dispositif d'entraînement (10) comprenant une turbomachine (20) rotative et un des corps formant enveloppe (30),
- la turbomachine (20) rotative présentant un axe de rotation (R) pouvant tourner à travers l'axe transversal (Q), et
- le corps formant enveloppe (30) présente une section (31) essentiellement cylindrique s'étendant le long de l'axe de rotation (R),
- la section (31) cylindrique entourant coaxialement la turbomachine (20),
- le corps formant enveloppe (30) étant formé en tant qu'aile annulaire, **caractérisé en ce que**
- le corps formant enveloppe (30) présentant un axe longitudinal de corps formant enveloppe et le corps formant enveloppe (30) est monté rotatif autour de l'axe longitudinal du corps formant enveloppe.

2. Objet volant (1) selon la revendication 1, **caractérisé en ce que** le corps formant enveloppe (30) peut tourner d'au moins 80°, en particulier d'au moins 90°, et/ou de 360° autour de l'axe transversal (Q).

3. Objet volant (1) selon l'une des revendications précédentes,
**caractérisé en ce que** plusieurs corps formant enveloppe (30) sont disposés de telle façon autour du fuselage (2) qu'au moins un corps formant enveloppe (30) est disposé dans une position différente dans la direction de l'axe longitudinal (L) de celle d'un autre corps formant enveloppe (30) et/ou **en ce que** l'au moins un corps formant enveloppe (30) est disposé dans une position différente perpendiculairement à l'axe longitudinal (L) de celle d'un autre corps formant enveloppe (30).

4. Objet volant (1) selon l'une des revendications précédentes,
**caractérisé en ce que** l'objet volant (1) présente au moins deux dispositifs d'entraînement (10), et au moins deux turbomachines (20) sont conçues pour tourner en sens opposé.

5. Objet volant (1) selon l'une des revendications précédentes,
**caractérisé en ce que** l'objet volant (1) présente au moins trois, de préférence quatre corps formant enveloppe (30).

6. Objet volant (1) selon l'une des revendications précédentes,
**caractérisé en ce que** l'objet volant (1) présente un corps formant enveloppe (30) en forme d'aile annulaire pouvant tourner autour d'un axe transversal (Q) s'étendant perpendiculairement à l'axe longitudinal (L) sans turbomachine (20) disposée dans celui-ci.

7. Corps formant enveloppe (30) pour un objet volant (1) pouvant décoller et atterrir verticalement, le corps formant enveloppe (30) présentant une section essentiellement cylindrique (31), une turbomachine (20) pouvant être disposée coaxialement à un axe de rotation (R) dans la section cylindrique (31), le corps formant enveloppe (30) étant réalisé sous la forme d'une aile annulaire et le corps formant enveloppe (30) présentant un dispositif de réception qui est conçu pour monter le corps formant enveloppe (30) rotatif autour d'un axe transversal (Q) sur un fuselage (2) de l'objet volant (1), **caractérisé en ce que** le corps formant enveloppe (30) présente un axe longitudinal de corps formant enveloppe et le corps formant enveloppe (30) peut être monté rotatif autour de l'axe longitudinal du corps formant enveloppe.

8. Corps formant enveloppe (30) selon la revendication 7,
**caractérisé en ce que** le corps formant enveloppe (30) présente une section transversale se rétrécissant le long de l'axe de rotation (R), le corps formant enveloppe (30) présente une face frontale (35) biseautée et/ou incurvée et/ou une face frontale (35) du corps formant enveloppe (30) présente au moins une cavité (36) et/ou au moins un déflecteur de flux (37) faisant saillie le long de l'axe de rotation (R), le corps formant enveloppe (30) présentant en particulier deux déflecteurs de flux (37), qui font saillie à un angle d'ouverture de 60° à 130°, avantageusement de 75° à 120°, particulièrement avantageusement de 115° l'un par rapport à l'autre.

9. Corps formant enveloppe (30) selon l'une des revendications 7 ou 8, **caractérisé en ce que** le côté extérieur (32) du corps formant enveloppe (30) présente une première section (33) s'étendant parallèlement à l'axe de rotation (R) et une deuxième section (34) s'étendant parallèlement à l'axe de rotation (R), la première section (33) présentant une courbure plus grande en valeur que la deuxième section (34).

10. Corps formant enveloppe (30) selon la revendication 9,
**caractérisé en ce que** la première section (33) est disposée diamétralement opposée à la deuxième section (34).
